# EUROPÄISCHE PATENTANMELDUNG

(11) **EP 0 679 328 A2**
(43) Veröffentlichungstag der Anmeldung: **02.11.1995**
(21) Anmeldenummer: 95105228.1
(22) Anmeldetag: 07.04.1995
(51) Int. Cl.: A01F 12/44

(54) **Gebläse und Verfahren zu seiner Montage**

(30) Priorität: 26.04.1994 US 233866
(71) Anmelder: DEERE & COMPANY, Moline, Illinois 61265 (US)
(72) Erfinder: Lauer, Fritz Karl, Bettendorf, Iowa 52722 (US); Rogers, David Wayne, Moline, Illinois 61265 (US)
(74) Vertreter: Feldmann, Bernhard

(57) **Zusammenfassung**

Ein aus Schaufeln (44) und Rotoren (38) zusammengesetztes Gebläse (30) weist Schnappverschlüsse (42) auf, die mit Ausnehmungen (56) in den Schaufeln (44) in Eingriff bringbar sind.

## Beschreibung

Die Erfindung betrifft ein Gebläse mit wenigstens einem Rotor und von diesem an Armen getragenen Schaufeln und ein Verfahren für dessen Zusammenbau.

Aus der BE-PS-560887 ist ein übliches Radialgebläse eines Mähdreschers bekannt, das eine Welle, auf dieser drehfest gehaltene Speichen und an diesen Speichen mittels Schrauben befestigte Schaufeln enthält. Es ist ersichtlich, daß angesichts der Vielzahl an Schraubverbindungen die Montage und die Demontage der Schaufeln sehr zeit- und somit kostenaufwendig ist.

Die US-A-4,906,219 offenbart ein Gebläse mit einer Welle und mehreren radial auf dieser aufsitzenden Scheiben, sowie einer Vielzahl gekrümmter Gebläseschaufeln, die sich über die gesamte Breite oder eine Teilbreite des Gebläses erstrecken. Zur Befestigung der Gebläseschaufeln sind die Scheiben mit sichelförmigen Öffnungen versehen, die der Aufnahme der Gebläseschaufeln dienen. Hierzu werden die Gebläseschaufeln geringfügig um ihre Längsachse gekrümmt und in der gekrümmten Lage in der Axialrichtung des Gebläses in die Öffnungen eingesetzt. Nach dem Einsetzen der Gebläseschaufeln werden diese entlastet, so daß sie reibschlüssig an den Wandungen der Öffnungen anliegen. Zudem sind im Bereich der Scheiben die Gebläseschaufeln mit einer Nut versehen, die ihrer axialen Lagesicherung dienen.

Dieses Gebläse ist insofern nachteilig, als es schwierig ist, die Krümmung der Gebläseschaufeln im Bereich aller Scheiben während der Montage aufrechtzuerhalten. Des weiteren müssen die Gebläseschaufeln aus hochelastischem Material hergestellt sein. Schließlich ist die Montage nur durch ein axiales Einfügen der Gebläseschaufeln möglich und somit relativ zeitaufwendig.

Die der Erfindung zugrundeliegende Aufgabe wird darin gesehen, ein Gebläse mit einfacheren Mitteln und ein Verfahren zu dessen Montage vorzuschlagen, die einen einfacheren und schnelleren Zusammenbau zulassen.

Diese Aufgabe wird erfindungsgemäß durch die Lehre des Patentanspruchs 1 bzw. des Patentanspruchs 9 gelöst, wobei in den jeweiligen weiteren Patentansprüchen die Lösung in vorteilhafter Weise weiterentwickelnde Merkmale aufgeführt sind.

Auf diese Weise kann jede Schaufel radial auf den Rotor aufgesetzt und durch Ineingriffbringen der Schnappverschlüsse gesichert werden. Die Schnappverschlüsse können an den Schaufeln wie auch an den Armen des Rotors vorgesehen sein. Sie können in Ausnehmungen, wie auch an den Kanten von Stegen eingreifen, bzw. einrasten. Außerdem können die Schnappverschlüsse als Schnappleisten, wie auch als punktuell wirkende Schnappverschlüsse ausgebildet sein, wobei sowohl normalerweise hakenförmige Schnappelemente aus Metall als auch aus Kunststoff verwendet werden können. Je nach der Ausbildung kann ein einfaches oder ein mehrfaches Hakenelement pro Befestigungsstelle Anwendung finden. Der Eingriff der Schnappverschlüsse kann sowohl durch eine tangential gerichtete wie auch durch eine radial gerichtete Bewegung erreicht werden.

Die Befestigung einerseits und die Sicherung der richtigen Lage der Schaufel andererseits erfolgt vorzugsweise mit Vorsprüngen, von denen wenigstens einer ein Schnappelement trägt oder ist, während der andere zumindest als Gegenlager dient, der die Schaufel in Eingriff mit dem Schnappelement hält.

Ist zur Aufnahme des Schnappverschlusses wenigstens eine Ausnehmung vorgesehen, kann mit dieser eine radiale Bewegung der Schaufel verhindert und mittels deren Kante oder Kanten der Schnappverschluss in Eingriff gebracht bzw. gehalten werden.

Wenn zur Aufnahme der Schaufel auf dem Rotor eine Nut vorgesehen ist, in die die Schaufel zumindest mit einer Endkante eingesetzt werden kann, ist diese auch umfangsmäßig gesichert, kann leicht auf dem Rotor positioniert werden und erhält eine Anlage für den Schwenkvorgang während der Montage.

Eine weitere Lagesicherung der Schaufel in beide tangentialen Richtungen ergibt sich durch die Verwendung einer weiteren Nut in dem insbesondere federnden Vorsprung.

Wenn sich beide Vorsprünge zwischen den Nuten befinden, werden sie beidseitig umgriffen und halten die Schaufel zuverlässig fest.

Der Schnappverschluß, der zum Teil von dem nachgiebigen Vorsprung gebildet wird, erhält seine Schnappfähigkeit durch ein Federelement, das zwischen beiden Vorsprüngen angeordnet und insbesondere aus einer Formgebung des Vorsprungs gebildet ist.

Wenn einer oder beide der Vorsprünge mit einer Kurvenfläche versehen ist, kann die Schaufel leichter in Eingriff mit dem Vorsprung gebracht, bzw. der Vorsprung leichter bewegt und dessen Federelement leichter gespannt werden.

Die erfindungsgemäße Ausbildung des Gebläses läßt eine einfache und schnelle Montage zu, die folgende Verfahrensschritte, Einsetzen der Schaufel in die Nut, Ausrichten der Ausnehmung gegenüber dem Schnappverschluß und Schwenken der Schaufel um die Nut in Eingriff die Ausnehmung begrenzender Kanten mit dem Schnappverschluß, aufweist.

Gegebenenfalls kann noch eine Kante der Schaufel in Eingriff mit einer Nut in einem Vorsprung des Schnappverschlusses gebracht werden.

In der Zeichnung ist ein nachfolgend näher beschriebenes Ausführungsbeispiel der Erfindung dargestellt. Es zeigt:
- Fig. 1: eine Erntemaschine in Seitenansicht und schematischer Darstellung mit einem erfindungsgemäßen Gebläse,

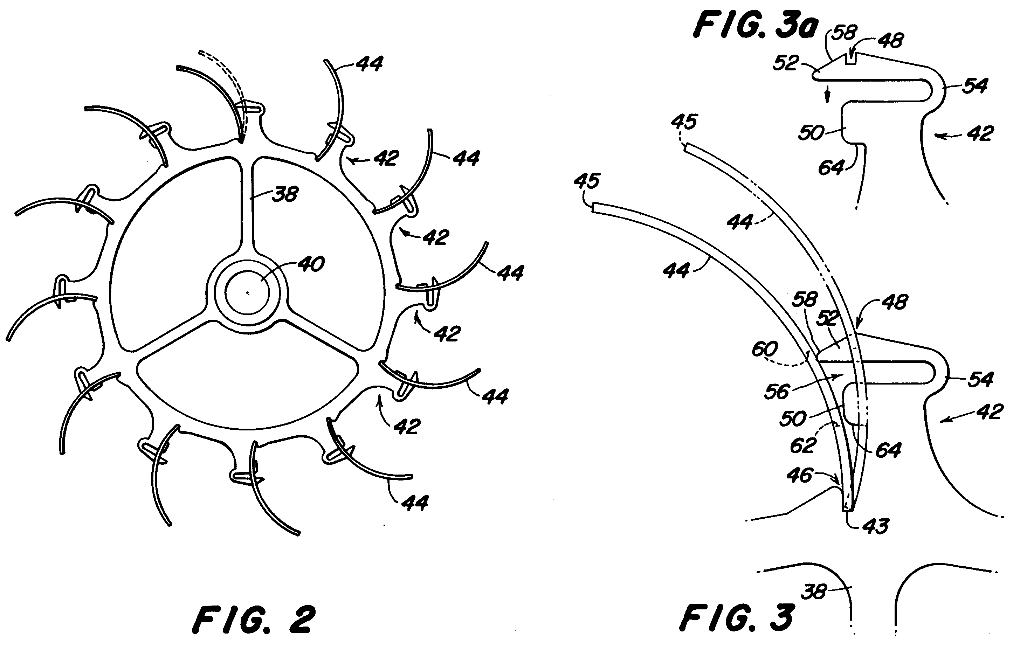

- Fig. 2: einen Teil des Gebläses in Seitenansicht und vergrößerter Darstellung,
- Fig. 3: einen Ausschnitt des Gebläses in vergrößerter Darstellung mit einem Schnappverschluß und einer Schaufel und
- Fig. 3a: den Ausschnitt aus Figur 3 ohne die Schaufel.

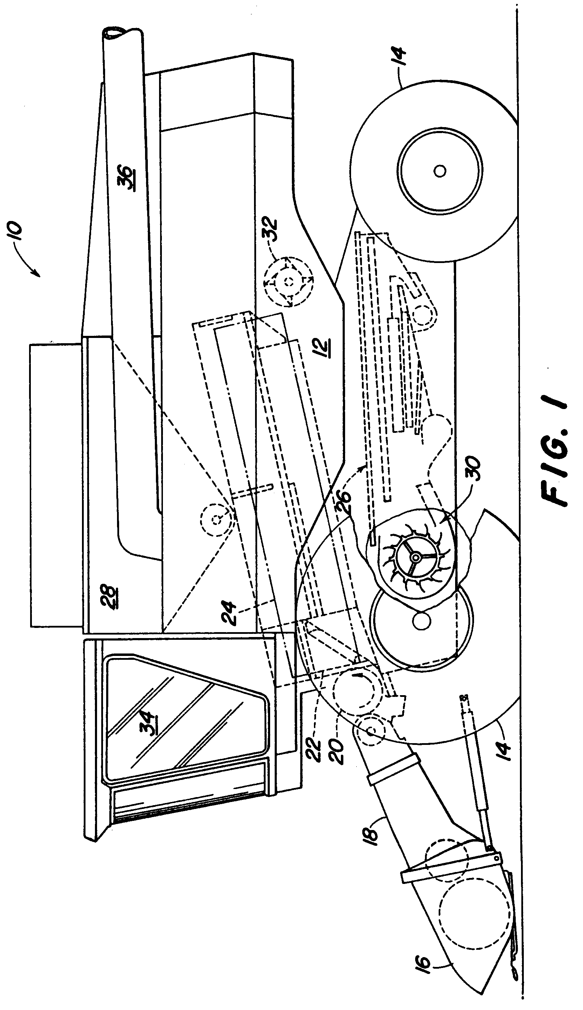

Figur 1 zeigt eine als Mähdrescher ausgebildete Erntemaschine 10 in Seitenansicht, die ein Fahrgestell 12 und diesen tragende Räder 14 aufweist. Von der Erntemaschine 10 erstreckt sich nach vorne eine Erntebergungsvorrichtung 16, die Erntegut einem Schrägförderer 18 zuführt. Der Schrägförderer 18 ist ein Förderer, der das Erntegut den Dresch-, Abscheide- und Reinigungskomponenten zuführt, die zwischen nicht im einzelnen gezeigten Seitenteilen der Erntemaschine 10 angeordnet sind. Obwohl die vorliegende Erfindung in Zusammenhang mit einem AIialmähdrescher offenbart ist, kann sie genauso auch an anderen Maschinen, insbesondere Mähdreschern der konventionellen Bauweise, verwendet werden, jedenfalls überall dort, wo es um ein Gebläse geht. Bei der dargestellten Erntemaschine 10 führt der Schrägförderer 18 das Erntegut einer sich quer erstreckenden Fördertrommel 20 zu, die es durch einen Aufnahmeübergangsabschnitt 22 zu einer Axialdresch- und Trenneinheit 24 weiterfördert. Getreide und Spreu werden von der Axialdresch- und Trenneinheit 24 zu einer Reinigungsvorrichtung 26 geführt. Die Reinigungsvorrichtung 26 gibt das saubere Getreide einem Korntank 28 auf, während die Spreu von einem erfindungsgemäßen Gebläse 30 zum rückwärtigen Ende der Erntemaschine 10 hinausgeblasen wird. Erntegut außer Getreide und Spreu wird von der Axialdresch- und Trenneinheit 24 einer quer verlaufenden Trommel 32 zugeführt, die es an der Rückseite der Erntemaschine 10 aus dieser auswirft. Das gereinigte Getreide wird eine Zeit lang in dem Korntank 28 gespeichert und kann von einer in einer Fahrerkabine 34 befindlichen Bedienungsperson durch Betätigung der Entladeschnecke 36 entladen werden.

Die vorliegende Erfindung ist auf das Gebläse 30 gerichtet. Das Gebläse 30 enthält eine Anzahl Rotoren 38 in der Form von Plastikrädern, die entlang einer Welle 40 und auf dieser gelagert angeordnet sind. Jeder Rotor 38 ist mit einer größeren Zahl sich radial erstreckender Arme oder Speichen versehen, die jeweils Schnappverschlüsse 42 für Schaufeln 44 enthalten. Die Schaufeln 44 erstrecken sich quer über die Rotoren 38 parallel zu der Welle 40. Anstatt mehrerer Rotoren 38 könnte auch ein einziger geschlossener oder durchbrochener Rotor 38 vorgesehen sein, der sich über die gesamte Länge des Gebläses 30 erstreckt.

In der weiteren Beschreibung werden die Bezeichnungen "innen" und "außen" in dem Sinne verwendet, daß "innen" für radial innen, d. h. der Drehachse zugelegen und "außen" radial außen, d. h. der Drehachse abgelegen steht.

Jeder Schnappverschluß 42 besitzt eine innere quer verlaufende Nut 46, die sich auf der Umfangsfläche des Rotors 38 befindet, und eine äußere quer verlaufende Nut 48, die sich auf der äußeren Spitze des Schnappverschlusses 42 befindet. Zwischen beiden Nuten 46 und 48 befindet sich ein innenliegender und ein außenliegender Vorsprung 50 und 52. Zwischen den beiden Vorsprüngen 50 und 52 ist ein Federelement 54 vorgesehen, um den äußeren Vorsprung 52 von dem inneren Vorsprung 50 wegzudrücken. Das Federelement 54 ist bei diesem Ausführungsbeispiel ein integrierter Bestandteil des äußeren Vorsprungs 52, der aus dem nachgiebigen, elastischen Material, aus dem er hergestellt ist, gebildet wird. Die äußere Nut 48 befindet sich in dem äußeren Vorsprung 52.

Jede Schaufel 44 enthält eine radial innenliegende und eine radial außenliegende Kante 43 und 45 und ist mit einer Vielzahl in diesem Fall rechteckförmiger Ausnehmungen 56 ausgerüstet, deren Lage der Anordnung der Vielzahl von Armen oder Speichen mit den Schnappverschlüssen 42 auf den Rotoren 38 entspricht. Zum Montieren der Schaufeln 44 auf die Zinken mit den Schnappverschlüssen 42 wird die jeweilige Schaufel 44 zunächst in die innere Nut 46 eingesetzt und dann solange axial an den Rotoren 38 entlang bewegt, bis sich die Ausnehmungen 56 gegenüber den Schnappverschlüssen 42 befinden. Dann wird die Schaufel 44 auf die inneren und äußeren Vorsprünge 50 und 52 tangential bzw. in Umfangsrichtung zubewegt. Dabei übergreifen die Ausnehmungen 56 die inneren und äußeren Vorsprünge 50 und 52. Der äußere Vorsprung 52 ist mit einer Kurvenfläche 58 versehen, die in Berührung mit einer oberen Kante 60 der Ausnehmung 56 gelangt und den äußeren Vorsprung 52 zu dem inneren Vorsprung 50 hinbewegt und dabei das Federelement 54 spannt. Wenn die obere Kante 60 der Schaufel 44 die äußere Nut 48 erreicht, schnellt der äußere Vorsprung 52 von dem inneren Vorsprung 50 weg und fängt die Schaufel 44 in dem Schnappverschluß 42. Die obere Kante 60 der Ausnehmung 56 berührt den Boden der äußeren Nut 48 und eine untere Kante 62 der Ausnehmung 56 liegt an einer unteren, d. h. inneren Fläche 64 des inneren Vorsprungs 52 an.

Zum Lösen der Schaufel 44 wird der äußere Vorsprung 52 zu dem inneren Vorsprung 50 hingedrückt, bis die äußere Nut 48 die obere Kante 60 der Ausnehmung 56 freigibt. Dann wird die Schaufel 44 von den Vorsprüngen 50 und 52 weggeschwenkt, bis die innere Kante 62 die innere Fläche 64 des inneren Vorsprungs 50 freigibt. Die Schaufel 44 wird dann der inneren Nut 46 entnommen.

## Patentansprüche

1. Gebläse (30) mit wenigstens einem Rotor (38) und von diesem an Armen getragenen Schaufeln (44), dadurch gekennzeichnet, daß zur Befestigung der Schaufeln (44) an den Armen Schnappverschlüsse (42) vorgesehen sind.

2. Gebläse nach Anspruch 1, dadurch gekennzeichnet, daß jeder Schnappverschluß (42) einerseits einen federnden und einen insbesondere starren Vorsprung (50) und (52) aufweist, die in Eingriff mit Kanten (60, 62) andererseits bringbar sind.

3. Gebläse nach Anspruch 2, dadurch gekennzeichnet, daß die Kanten (60, 62) von den Wandungen einer Ausnehmung (56) gebildet werden.

4. Gebläse nach einem oder mehreren der vorherigen Ansprüche, dadurch gekennzeichnet, daß die Schaufel (44) zur weiteren Lagesicherung in eine Nut (46) des Rotors (38) oder des Arms einsetzbar ist.

5. Gebläse nach einem oder mehreren der vorherigen Ansprüche, dadurch gekennzeichnet, daß insbesondere der federnde Vorsprung (52) eine Nut (48) aufweist, die eine der Kanten (60, 62) hintergreift.

6. Gebläse nach einem oder mehreren der vorherigen Ansprüche, dadurch gekennzeichnet, daß beide Vorsprünge (50, 52) zwischen den insbesondere axial verlaufenden Nuten (46, 48) vorgesehen sind.

7. Gebläse nach einem oder mehreren der vorherigen Ansprüche, dadurch gekennzeichnet, daß die Nachgiebigkeit des Vorsprungs (52) von einem zwischen beiden Vorsprüngen (50, 52) angeordneten und insbesondere aus einer Formgebung des Vorsprungs (52) gebildeten Federelement (54) erzielt wird.

8. Gebläse nach einem oder mehreren der vorherigen Ansprüche, dadurch gekennzeichnet, daß wenigsten einer der Vorsprünge (50, 52) mit einer Kurvenfläche (58) versehen ist.

9. Verfahren zum Montieren einer Schaufel (44) auf einem Rotor (38) eines Gebläses (30) mittels wenigstens eines Schnappverschlusses (42), wenigstens einer diesem zugeordneten Ausnehmung (56) und wenigstens einer Nut (46) in dem Rotor (38), gekennzeichnet durch folgende Verfahrensschritte:
a) Einsetzen der Schaufel (44) in die Nut (46),
b) Ausrichten der Ausnehmung (56) gegenüber dem Schnappverschluß (42) und
c) Schwenken der Schaufel (44) um die Nut (46) in Eingriff die Ausnehmung (56) begrenzender Kanten (60, 62) mit dem Schnappverschluß (42).

10. Verfahren nach Anspruch 9, dadurch gekennzeichnet, daß eine Kante (60) der Schaufel (44) in Eingriff mit einer Nut (48) in einem Vorsprung (52) des Schnappverschlusses (42) gebracht wird.
